# EUROPEAN PATENT APPLICATION

(11) **EP 3 089 466 A1**
(43) Date of publication of application: **02.11.2016**
(21) Application number: 14873488.2
(22) Date of filing: 22.12.2014
(51) Int. Cl.: H04N 21/472

(54) **METHOD AND DEVICE FOR SAME-SCREEN INTERACTION**

(30) Priority: 23.12.2013 CN 201310733649
(71) Applicant: LE Holdings (Beijing) Co., Ltd., Beijing 100025 (CN); Le Shi Zhi Xin Electronic Technology (Tianjin) Limited, Beijing 100025 (CN)
(72) Inventor: LI, Zhen, Beijing 100025 (CN)
(74) Representative: Gosnall, Toby
(86) International application number: PCT/CN2014/094529
(87) International publication number: WO 2015/096679

(57) **Abstract**

Provided are a method and device for same-screen interaction, applicable in a multimedia device transmitting terminal having a same-screen share function. The method comprises: step A. when the multimedia device transmitting terminal is detected to be in a same-screen sharing state, establishing a connection with a remote data server (101); step B. acquiring from entries of association relationships between video links and first interactive data prestored by the remote data server first interactive data associated with a currently playing video link (102); and, step C. controlling the multimedia device transmitting terminal to display the first interactive data (103). Utilization of the present invention allows for interactive functions such as commenting and chatting on the multimedia device transmitting terminal while using the same-screen share function of a multimedia device.

## Description

This application is based upon and claims priority to Chinese Patent Application No. 201310733649.X, titled "Method and Device for Same-screen Interaction", filed on December 23, 2013, the entire contents of which are incorporated herein by reference.

### FIELD OF TECHNOLOGY

The present disclosure relates to the technical field of multimedia and particularly to a method and device for same-screen interaction.

### BACKGROUND

The same-screen sharing technology has been increasingly applied as smart handsets, tablet computers, network set-top boxes, smart TVs, and other multimedia devices become popularized at home. With the same-screen sharing technology in the same local area network, video data played by a multimedia device transmitter are transmitted to a multimedia device receiver, and the multimedia device receiver decodes and plays the data upon reception of the data. A video played on a handset, a tablet computer, etc., can be pushed conveniently to a smart TV, a projector, or another playing device provided with a large screen to extend the video, so that the smart TV or the other playing device provided with the large screen can also play the same video as the handset, the tablet computer, etc., while the video is being played by the handset, the tablet computer, etc., to thereby both improve a visual experience and make it convenient for the family to watch the video.

With the existing same-screen sharing technology, after the video on the multimedia device transmitter is projected onto the multimedia device receiver using the same-screen sharing technology, if the multimedia device receiver searches, using a link to the video, for and plays the contents of the video through a server, then a black screen with a play control bar may be displayed on a screen of the multimedia device transmitter; and if the multimedia device transmitter decodes and then plays the video, and further pushes the video to the multimedia device receiver, then the same video will be displayed on the screens of the multimedia device transmitter and the multimedia device receiver. This has been done for the reasons that power consumption of the multimedia device transmitter displaying the black screen can be lowered to thereby save electrical energy on one hand; and that if the same video as the receiver of the smart TV is displayed, then the video can be decoded by making full use of a processing capacity of the multimedia device transmitter on the other hand.

However as various pieces of social interaction software are emerging, existing same-screen sharing may not be satisfactory to consumers if the multimedia transmitter still displays a black screen or plays the same video as the TV, so it is highly desirable to provide a method for enabling the multimedia device transmitter to further display comments on the currently played video during same-screen sharing so as to address the problem above.

### SUMMARY

In view of this, the disclosure provides a method and device for same-screen interaction so that a multimedia device transmitter still can make a comment, have a chat, and perform other interactive functions while a same-screen sharing function of a multimedia device is enabled.

The disclosure provides a method for same-screen interaction, applicable to a multimedia device transmitter with a same-screen sharing function, the method including:
a step A of setting-up a connection with a remote data server upon detecting that the multimedia device transmitter is in a same-screen sharing state;
a step B of obtaining first interaction data associated with a link to a currently played video from table entries of association relationship between links to videos and first interaction data, pres-stored in the remote data server; and
a step C of controlling the multimedia device transmitter to display the first interaction data.

Preferably, the first interaction data include at least one of a video comment and a related video.

Preferably, the step A of detecting that the multimedia device transmitter is in the same-screen sharing state includes:
detecting whether a same-screen sharing service of the multimedia device transmitter is set to the same-screen sharing state, and if so, then determining that the multimedia device transmitter is in the same-screen sharing state.

Preferably, the step B further includes: obtaining a current logon account of the multimedia device transmitter, and second interaction data associated with the logon account; and
the step C further includes: controlling the multimedia device transmitter to display the second interaction data including at least one of user information, friend information, and a chat record, associated with the logon account.

Preferably, the method further includes:
controlling the multimedia device transmitter to display the first interaction data and/or second interaction data, upon reception of a first setting instruction; and
controlling the multimedia device transmitter to stop the first interaction data and/or the second interaction data from being displayed, upon reception of a second setting instruction.

The disclosure further provides a device for same-screen interaction, applicable to a multimedia device transmitter with a same-screen sharing function, the device including:
a connection setup module configured to set up a connection with a remote data server upon detecting that the multimedia device transmitter is in a same-screen sharing state;
a data obtaining module configured to obtain first interaction data associated with a link to a currently played video from table entries of association relationship between links to videos and first interaction data, pres-stored in the remote data server; and
a display controlling module configured to control the multimedia device transmitter to display the first interaction data.

Preferably, the first interaction data include at least one of a video comment and a related video.

Preferably, the connection setup module configured to detect that the multimedia device transmitter is in the same-screen sharing state is configured: to detect whether a same-screen sharing service of the multimedia device transmitter is set to the same-screen sharing state, and if so, to determine that the multimedia device transmitter is in the same-screen sharing state.

Preferably, the data obtaining module is further configured to obtain a current logon account of the multimedia device transmitter, and second interaction data associated with the logon account; and
the display controlling module is further configured to control the multimedia device transmitter to display the second interaction data including at least one of user information, friend information, and a chat record, associated with the logon account.

Preferably, the device is further configured:
to control the multimedia device transmitter to display the first interaction data and/or second interaction data, upon reception of a first setting instruction; and
to control the multimedia device transmitter to stop the first interaction data and/or the second interaction data from being displayed, upon reception of a second setting instruction.

As can be apparent, in the disclosure, if it is detected that the multimedia device transmitter is in the same-screen sharing state, then a connection will be set up with the remote data server, and the table entries of association relationship between links to videos and first interaction data, pre-stored in the remote data server will be searched for a video comment and other data associated with the link to the currently played video, and the multimedia device transmitter will be controlled to display the video comment and the other data on the display screen of the multimedia device, so that the user can further comment on the currently played video while watching the video using the same-screen sharing service to thereby address the problem in the prior art of impossible interaction during same-screen sharing.

### BRIEF DESCRIPTION OF THE DRAWINGS

Fig.1 is a flow chart of a method for same-screen interaction according to an embodiment of the disclosure; and
Fig.2 is a schematic logic diagram of a device for same-screen interaction according to an embodiment of the disclosure.

### DESCRIPTION OF THE EMBODIMENTS

Typically after a user projects a video played on a multimedia device transmitter to a multimedia device receiver using the same-screen sharing technology, contents displayed by the multimedia device transmitter are generally a black screen with a play control bar, or the same video as a display screen of the multimedia device receiver, and at this time the multimedia device transmitter can only perform video control on the video. In the disclosure, the user accessing a same-screen sharing service is connected with a remote data server, searches table entries preset in the remote data server for interaction data associated with a link to the currently played video, and displays the interaction data on a display screen of the multimedia device transmitter, so that the user can further view user information, a chat record, a friend state, a video comment, and other various interaction data on the multimedia device transmitter while watching a video program on the screen of the multimedia device receiver. The same-screen interaction function can greatly enrich and enhance the same-screen sharing function, and enable the user to enjoy joys brought to his or her life due to the integration of multimedia social interaction with wireless transmission, in a more user-friendly mode.

The method for same-screen interaction according to the disclosure can be applicable to a multimedia playing device. The multimedia device receiver is typically a smart TV or another electronic playing device, e.g., a projector, etc.; and the multimedia device transmitter is typically a smart handset, a tablet computer, or another electronic play device, although the following embodiments of the disclosure will be described in details assuming the multimedia device receiver as a smart TV, and the multimedia device transmitter as a smart handset by way of an example.

The following embodiments will be presented below in order to further set forth the disclosure.

### First Embodiment

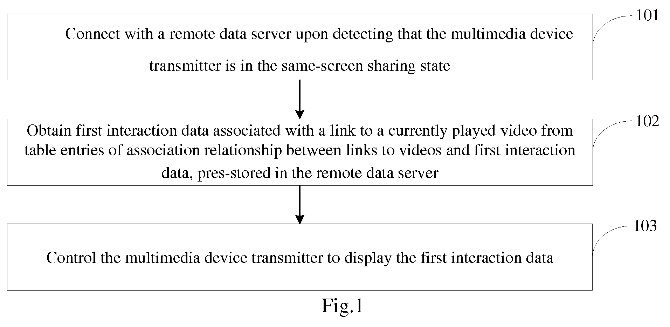

Referring to Fig.1, this embodiment provides a method for same-screen interaction, applicable to a multimedia device transmitter, where the method includes:
The step 101 is to connect with a remote data server upon detecting that the multimedia device transmitter is in the same-screen sharing state;

In order to achieve a better experience effect, a user watching an online video on the multimedia device transmitter, e.g., a smart handset, etc., will push or share the played video to a multimedia device receiver, e.g., a screen of a smart TV, etc., for watching. The video needs to be pushed or shared from the smart handset to the smart TV by invoking a same-screen sharing service, e.g., one of AirPlay, WiDi, Miracast, DLNA, and other wireless video transmission services. If it is detected that one or more of the same-screen sharing services above are enabled, then it will be determined that the multimedia device transmitter and the multimedia device receiver have set up communication and are sharing the video on the same screen, and at this time a same-screen sharing state of the smart handset will be set to the same-screen sharing state. If the video is watched online on the smart handset, then if it is detected that the same-screen sharing service of the smart handset is set to the same-screen sharing state, then an instruction to connect with the remote data server will be sent to set up communication with the remote data server.

The step 102 is to obtain first interaction data associated with a link to a currently played video from table entries of association relationship between links to videos and first interaction data, pres-stored in the remote data server;

The link to the currently played video is sent to the remote data server in which the table entries of association relationship between links to videos and first interaction data, and the first interaction data associated with the link to the currently played video is obtained from the table entries of association relationship between links to videos and first interaction data, pres-stored in the remote data server, where the first interaction data typically include a video comment and other contents.

The step 103 is to control the multimedia device transmitter to display the first interaction data.

After the first interaction data are obtained, an operating system invokes a display interface of the smart handset, and controls a display of the smart handset via the display interface to display the obtained first interaction data, e.g., a video comment and other contents, where the first interaction data can be displayed the foremost of the screen of the smart handset in the form of a window overlying all or a part of a page of the video being played during same-screen sharing.

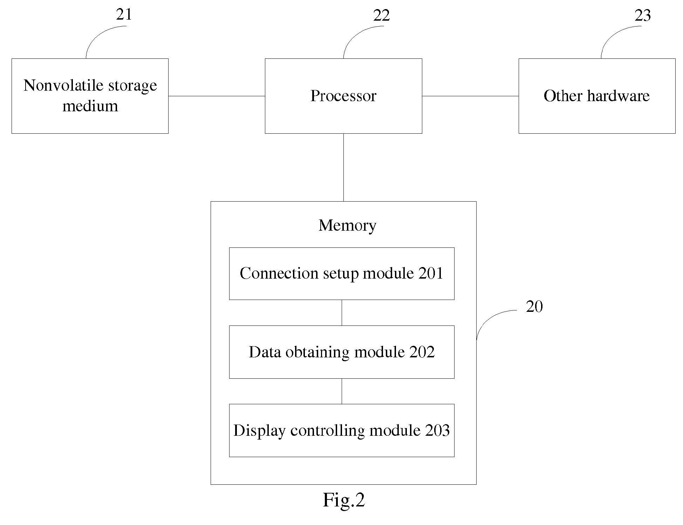

In this embodiment, there is further provided a device for same-screen interaction, applicable to a multimedia device transmitter, and referring to Fig.2, a general hardware environment of the device includes a memory 20, a nonvolatile storage medium 21, a processor 22, and other hardware 23. The device logically includes a connection setup module 201, a data obtaining module 202, and a display controlling module 203, and the device in operation performs the following flow:

The connection setup module 201 is configured to set up a connection with a remote data server upon detecting that the multimedia device transmitter is in a same-screen sharing state;

In order to achieve a better experience effect, a user watching an online video on the multimedia device transmitter, e.g., a smart handset, etc., will push or share the played video to a multimedia device receiver, e.g., a screen of a smart TV, etc., for watching. The video needs to be pushed or shared from the smart handset to the smart TV by invoking a same-screen sharing service, e.g., one of AirPlay (an AirPlay audio player), WiDi (Inter WirelessDisplay), Miracast (a wireless protocol of video sharing which is a Wi-Fi Certified Miracast^{™} item started by the Wi-Fi Alliance on September 19, 2012), DLNA (Digital Living Network Alliance initiated by Sony, Intel, Microsoft, etc., and intended to address interconnection and intercommunication of wireless and wired networks including Personal Computers (PCs), consumer electronic devices, and mobile devices to thereby make it possible to share and grow digital media and content services unlimitedly), and other wireless video transmission services. If the connection setup module 201 detects that one or more of the same-screen sharing services above are enabled, then it will be determined that the multimedia device transmitter and the multimedia device receiver have set up communication and are sharing the video on the same screen, and at this time a same-screen sharing state of the smart handset will be set to the same-screen sharing state.

If a link to some video is triggered, that is while the video is being watched online on the smart handset, if it is detected that the same-screen sharing service of the smart handset is set to the same-screen sharing state, then an instruction to connect with the remote data server will be sent to set up communication with the remote data server.

The data obtaining module 202 is configured to obtain first interaction data associated with a link to a currently played video from table entries of association relationship between links to videos and first interaction data, pres-stored in the remote data server;

The link to the currently played video is sent to the remote data server in which the entries of association relationship between links to videos and first interaction data, and the first interaction data associated with the link to the currently played video is obtained from the entries of association relationship between links to videos and first interaction data, pres-stored in the remote data server, where the first interaction data typically include a video comment and other contents.

The display controlling module 203 is configured to control the multimedia device transmitter to display the first interaction data.

After the first interaction data are obtained, the display controlling module 203 invokes a display interface of the smart handset, and controls a display of the smart handset via the display interface to display the obtained first interaction data, e.g., a video comment and other contents, where the first interaction data can be displayed the foremost of the screen of the smart handset in the form of a window overlying all or a part of a page of the video being played during same-screen sharing.

In this embodiment, if it is detected that the multimedia device transmitter is in the same-screen sharing state, then the preset table entries of association relationship between links to videos and first interaction data will be searched for the first interaction data (a comment, etc.) associated with the link to the currently played video, and the multimedia device transmitter will be controlled to display the first interaction data on the display screen of the multimedia device, so that the user can further comment on the video, view other comments, etc., while watching the video using the same-screen sharing service to thereby address the problem in the prior art of impossible interaction during same-screen sharing.

### Second Embodiment

This embodiment further refines the first embodiment above.

Typically a user watching a video generally is personally used to watch the video on a fixed video client or over a fixed video playing website. If the user watches the video on some client of a smart handset, and it is detected that the smart handset pushes the video to a smart TV for navigation or same-screen sharing, through one of AirPlay, WiDi, Miracast, DLNA, and other wireless video transmission services, then it will be further detected whether the user is logging on using his or her registered username and password, while searching for first interaction data associated with a link to the video currently played for the user.

If it is detected that the user is logging on using his or her username and password, and passes authentication, then preset table entries of association relationship between identity authentication information and second interaction data will be searched, using identity authentication information of the logging user, the username, and the password, for second interaction data associated with the identity authentication information of the user, where the second interaction data are typically personal information, friend information, a chat record, etc., of the user.

After the second interaction data associated with the identity authentication information of the user are found, then an operating system will control the smart handset to display the second interaction data on a display screen of the smart handset together with the found first interaction data associated the link to the video, and can update and display in real time the first interaction data and the second interaction data in response to updates to the table entries of association relationship between links to videos and first interaction data, and the table entries of association relationship between identity authentication information and second interaction data.

In the prior art, after the video on the handset is projected to the smart TV using the same-screen sharing technology, the contents displayed on the screen of the handset are generally a black screen with a play control bar configured to control progression and other settings of the video. Further to this, the first interaction data and the second interaction data in this embodiment can be displayed on the display screen of the smart handset in the form of a displayed interactive window, which can overlie all or a part of the page of the video being played during same-screen sharing, or which can be adjusted in size by the user as desired, so that the progression, volume, brightness, same-screen sharing, and other states of the video can be adjusted and controlled through the play control bar at any time during same-screen interaction.

In the method for same-screen interaction according to the embodiment of the disclosure, after the identity authentication information of the user is detected, the interaction data associated with the identity authentication information of the user will be displayed on the display screen of the smart handset, so in view of a personal privacy, and in order to be further compatible with demands of the majority of users, this method can be further configured to control the multimedia device transmitter to stop the first interaction data and/or the second interaction data from being displayed, upon reception of a setting instruction of the user. For example, the smart handset is controlled to display the first interaction data and/or the second interaction data, upon reception of a setting instruction of the user to display the function; and in another example, the smart handset is controlled to stop the first interaction data and/or the second interaction data from being displayed, upon reception of a setting instruction of the user to stop the function from being displayed, so that the user for which the same-screen interaction function is enabled can disable the function or the other settings optionally.

This embodiment further provides a device for same-screen interaction. Typically a user watching a video generally is personally used to watch the video on a fixed video client or over a fixed video playing website. If the user watches the video on some client of a smart handset, and the connection setup module 201 detects that the smart handset pushes the video to a smart TV for navigation or same-screen sharing, through one of AirPlay, WiDi, Miracast, DLNA, and other wireless video transmission services, then it will be further detected whether the user is logging on using his or her registered username and password, while searching for first interaction data associated with a link to the video currently played for the user.

If it is detected that the user is logging on using his or her username and password, and passes authentication, then preset table entries of association relationship between identity authentication information and second interaction data will be searched, using identity authentication information of the logging user, the username, and the password, for second interaction data associated with the identity authentication information of the user, where the second interaction data are typically personal information, friend information, a chat record, etc., of the user.

After the second interaction data associated with the identity authentication information of the user are found, then the display controlling module 203 will control the smart handset to display the second interaction data on a display screen of the smart handset together with the first interaction data associated the link to the video, found by the display controlling module 203, and can update and display in real time the first interaction data and the second interaction data in response to updates to the table entries of association relationship between links to videos and first interaction data, and the table entries of association relationship between identity authentication information and second interaction data. In the prior art, after the video on the handset is projected to the smart TV using the same-screen sharing technology, the contents displayed on the screen of the handset are generally a black screen with a play control bar configured to control progression and other settings of the video. Further to this, the first interaction data and the second interaction data in this embodiment can be displayed on the display screen of the smart handset in the form of a displayed interactive window, which can overlie all or a part of the page of the video being played during same-screen sharing, or which can be adjusted in size by the user as desired, so that the progression, volume, brightness, same-screen sharing, and other states of the video can be adjusted and controlled through the play control bar at any time during same-screen interaction.

In the method for same-screen interaction according to the embodiment of the disclosure, after the identity authentication information of the user is detected, the interaction data associated with the identity authentication information of the user will be displayed on the display screen of the smart handset, so in view of a personal privacy, and in order to be further compatible with demands of the majority of users, this device for same-screen interaction can be further configured to control the multimedia device transmitter to stop the first interaction data and/or the second interaction data from being displayed, upon reception of a setting instruction of the user. For example, the smart handset is controlled to display the first interaction data and/or the second interaction data, upon reception of a setting instruction of the user to display the function; and in another example, the smart handset is controlled to stop the first interaction data and/or the second interaction data from being displayed, upon reception of a setting instruction of the user to stop the function from being displayed, so that the user for which the same-screen interaction function is enabled can disable the function or the other settings optionally. In summary, in the disclosure, if it is detected that the multimedia device transmitter is in the same-screen sharing state, then the obtained first interaction data and second interaction data (friend information, a chat record, etc.) will be displayed on the display screen of the multimedia device transmitter, so that the user can further make a friend, have a chat, comment on the video, view other comments, or perform other operations while watching a video program on the screen of the multimedia device receiver, thus greatly enriching and enhancing the same-screen sharing function, and enabling the user to enjoy more joys brought to his or her life due to the integration of multimedia social interaction with wireless transmission.

The disclosure further provides a computer readable recording medium on which a program for performing the method according to claim 1 is recorded. The computer readable recording medium includes any mechanism for storing or transporting computer (just to name an example) readable information. For example the computer readable recording medium includes a Read Only Memory (ROM), a Random Access Memory (RAM), a magnetic disk storage medium, an optical storage medium, a flash memory medium, an electric, optical, acoustic or another form of propagated signal (e.g., a carrier wave, an infrared signal, a digital signal, etc.), etc.

The foregoing disclosure is illustrative of the particular embodiments of the disclosure, but the disclosure shall not be limited thereto; and any variations or equivalents which can readily occur to those skilled in the art without departing from the scope of the disclosure shall fall into the scope of the disclosure.

## Claims

1. A method for same-screen interaction, applicable to a multimedia device transmitter with a same-screen sharing function, the method comprising:
a step A of setting-up a connection with a remote data server upon detecting that the multimedia device transmitter is in a same-screen sharing state;
a step B of obtaining first interaction data associated with a link to a currently played video from table entries of association relationship between links to videos and first interaction data, pres-stored in the remote data server; and
a step C of controlling the multimedia device transmitter to display the first interaction data.

2. The method according to claim 1, wherein the first interaction data comprise at least one of a video comment and a related video.

3. The method according to claim 1, wherein the step A of detecting that the multimedia device transmitter is in the same-screen sharing state comprises:
detecting whether a same-screen sharing service of the multimedia device transmitter is set to the same-screen sharing state, and if so, then determining that the multimedia device transmitter is in the same-screen sharing state.

4. The method according to claim 1, wherein the step B further comprises: obtaining a current logon account of the multimedia device transmitter, and second interaction data associated with the logon account; and
the step C further comprises: controlling the multimedia device transmitter to display the second interaction data comprising at least one of user information, friend information, and a chat record, associated with the logon account.

5. The method according to claim 1, wherein the method further comprises:
controlling the multimedia device transmitter to display the first interaction data and/or second interaction data, upon reception of a first setting instruction; and
controlling the multimedia device transmitter to stop the first interaction data and/or the second interaction data from being displayed, upon reception of a second setting instruction.

6. A device for same-screen interaction, applicable to a multimedia device transmitter with a same-screen sharing function, the device comprising:
a connection setup module configured to set up a connection with a remote data server upon detecting that the multimedia device transmitter is in a same-screen sharing state;
a data obtaining module configured to obtain first interaction data associated with a link to a currently played video from table entries of association relationship between links to videos and first interaction data, pres-stored in the remote data server; and
a display controlling module configured to control the multimedia device transmitter to display the first interaction data.

7. The device according to claim 6, wherein the first interaction data comprise at least one of a video comment and a related video.

8. The device according to claim 6, wherein the connection setup module configured to detect that the multimedia device transmitter is in the same-screen sharing state is configured: to detect whether a same-screen sharing service of the multimedia device transmitter is set to the same-screen sharing state, and if so, to determine that the multimedia device transmitter is in the same-screen sharing state.

9. The device according to claim 6, wherein the data obtaining module is further configured to obtain a current logon account of the multimedia device transmitter, and second interaction data associated with the logon account; and
the display controlling module is further configured to control the multimedia device transmitter to display the second interaction data comprising at least one of user information, friend information, and a chat record, associated with the logon account.

10. The device according to claim 6, wherein the device is further configured:
to control the multimedia device transmitter to display the first interaction data and/or second interaction data, upon reception of a first setting instruction; and
to control the multimedia device transmitter to stop the first interaction data and/or the second interaction data from being displayed, upon reception of a second setting instruction.

11. A computer readable recording medium on which a program for performing a method according to claim 1 is recorded.
